# EUROPEAN PATENT SPECIFICATION

(11) **EP 1 416 761 B1**
(45) Date of publication and mention of the grant of the patent: **23.05.2007**
(21) Application number: 03024898.3
(22) Date of filing: 31.10.2003
(51) Int. Cl.: H04Q 11/00

(54) **OAM packet transmission control method and multiplexer for an Ethernet Passive Optical Network**
Multiplexer und Verfahren zur OAM Paketübertragungssteuerung für ein Ethernet Passives Optisches Netzwerk
Multiplexeur et méthode de contrôle de transmission de paquets OAM dans un Réseau Optique Passive Ethernet

(30) Priority: 31.10.2002 KR 2002067037
(43) Date of publication of application: 06.05.2004
(73) Proprietor: SAMSUNG ELECTRONICS CO., LTD., Suwon-City, Kyungki-do (KR)
(72) Inventor: Lim, Se-Youn, Suwon-city Kyungki-do (KR); Song, Jae-Yeon, Suwon-city Kyungki-do (KR); Kim, Su-Hyung, Suwon-city Kyungki-do (KR); Lee, Min-Hyo, Suwon-city Kyungki-do (KR); Kim, Jin-Hee, Suwon-city Kyungki-do (KR); Kim, A-Jung, Suwon-city Kyungki-do (KR); Kang, Dae-Eop, Suwon-city Kyungki-do (KR)
(74) Representative: Grünecker, Kinkeldey, Stockmair & Schwanhäusser Anwaltssozietät

(56) References cited:
- EP-A- 1 091 525
- WO-A-98/32307
- KRAMER G ET AL: "ETHERNET PASSIVE OPTICAL NETWORK (EPON): BUILDING A NEXT-GENERATION OPTICAL ACCESS NETWORK" IEEE COMMUNICATIONS MAGAZINE, IEEE SERVICE CENTER. PISCATAWAY, N.J, US, vol. 40, no. 2, February 2002 (2002-02), pages 66-73, XP001125420 ISSN: 0163-6804
- PESAVENTO, KUO, KOYAMA: "IEEE Access Standards, 802.3ah GE-PON Status" ITU-T WORKSHOP IP/OPTICAL, [Online] 9 - 11 July 2002, XP002268152 Chitose Japan Retrieved from the Internet: <URL:http://www.itu.int/itudoc/itu-t/works hop/optical/s3amp03.pdf> [retrieved on 2004-01-27]
- BEN BROWN;KEVIN DAINES: "OAM Control" IEEE 802.3AH EFM TASK FORCE, 4 November 2002 (2002-11-04),

## Description

### BACKGROUND OF THE INVENTION

### 1. Field of the Invention

The present invention relates generally to an Ethernet passive optical network (EPON), and in particular, to a method for transmitting operation, administration and maintenance (hereinafter referred to as "OAM") information in an EPON.

### 2. Description of the Related Art

Standardization of medium access control (MAC) technology for Gigabit Ethernet and asynchronous transfer mode-passive optical network (ATM-PON) has already been completed, that standard appearing in IEEE 802.3z and ITU-T G983.1. In an ATM-PON which was first standardized, upstream and downstream transmissions are performed of frames created by grouping ATM cells of predetermined size. The ATM-PON has a tree-type structure by means of which an optical line termination (OLT) appropriately inserts downstream cells to be distributed to respective optical network units (ONUs) into the frame.

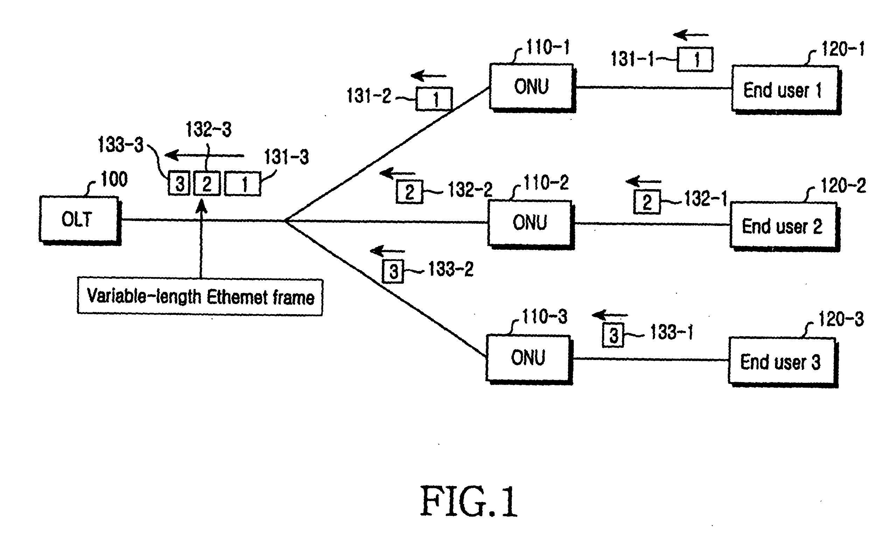

FIG 1 is a block diagram illustrating a physical network structure of a general passive optical network. The network features one OLT 100 and one or more ONUs 110-1 to 110-3 each connected to the OLT 100. At least one end user (or network device) 120-1 to 120-3 is connected to each of the ONUs 110-1 to 110-3. Data 131-1 to 133-1 transmitted by the end users 120-1 to 120-3 is delivered to the OLT 100 via the ONUs 110-1 to 110-3.

In the EPON structure shown in FIG 1 for transmitting an 802.3 Ethernet frame via a network with a point-to-multipoint (PTM) structure, and in accordance with a so-called ranging method of an optical distribution network (ODN) which is a passive element, data from the ONUs is multiplexed during upstream transmission to prevent data collision and is accessed by time division multiplexing (TDM), and the ONUs 110-1 to 110-3 receiving data broadcasted by the OLT 100 select only their own data from the received data.

To this end, upstream and downstream frames include a field for exchanging messages at stated periods, prepared in a private ATM cell or a general ATM cell. With the development of Internet technology, a subscriber side requires more bandwidth. End-to-end transmission will therefore likely be achieved with Gigabit Ethernet technology which provides relatively inexpensive equipment and can secure high bandwidth, rather than through ATM technology which provides relatively expensive equipment, has a bandwidth limitation and must segment an IP (Internet Protocol) packet. Therefore, even a PON structure requires Ethernet technology instead of ATM technology.

The IEEE 802.3ah Ethernet in the First Mile Task Force newly defines an OAM sublayer in an Ethernet system to be applied to First Mile, standardization of which is now under way. This standard gives higher priority to an OAM frame than to a data frame and minimizes the time required to generate and transmit the OAM frame, thereby making the OAM function more efficient. Specifically, in accordance with the IEEE802.3ah EFM Draft v1.1, the OAM sublayer cuts off a path for transmitting MAC client data from an upper layer (i.e., MAC client), to alleviate difficulty that would otherwise consequently arise in delivering OAM PDUs (Packet Data Units) to a MAC control sublayer.

The cutting off of the MAC client data path, however, is operational only in a loop-back or unidirectional mode, so that, in a non-loop-back mode and a non-unidirectional mode, no priority is determined between OAM PDUs and MAC client data. For example, if there are many MAC client data frames at a time when OAM PDUs are generated, it is not possible to immediately transmit the generated OAM PDUs, preventing efficient transmission of OAM information.

EP 1 091 525 A2 describes a packet communications customer-station apparatus. When there is a PLOAM cell in the upstream direction, a PLOAM generating unit transmits a transmission request to an access control section. When a transmission permission is received, the access control section most preferentially handles the transmission request and controls the transmission command so as to temporarily suspend the reading operation of the ATM cell from an input buffer.

WO 98/32307 A1 describes a TDM/TDMA distribution network where connection orientated communicative services are multiplexed with signalling and MAC messages over an upstream channel.

### SUMMARY OF THE INVENTION

It is the object of the invention to provide a method and apparatus for transmitting OAM packet data that are capable of assuring efficient network management.

This object is solved by the invention as claimed in the independent claims.

Preferred embodiments are defined in the dependent claims.

According to an aspect of the invention, an OAM packet data transmission method and apparatus are provided that immediately transmit generated OAM PDUs, as well as an EPON including a control multiplexer for the same.

Accordingly, there is provided method for transmitting OAM (Operation, Administration and Maintenance) packet data by a control multiplexer of an OAM sublayer in an Ethernet passive optical network (EPON), the OAM sublayer transmitting MAC (Medium Access Control) client data transmitted from a MAC client and OAM packet data made in an OAM controller to a MAC entity. In accordance with the method, if OAM packet data is generated by the OAM controller, higher priority is given to the OAM packet data rather than MAC client data that is waiting to be transmitted in the MAC client. The OAM packet data and the MAC client data are multiplexed according to the priority and transmitted to the MAC entity.

According to the present invention, a control multiplexer of an OAM sublayer for multiplexing MAC client data frames and OAM PDUs gives higher priority to the OAM PDUs than to the MAC client data frames. Therefore, if for some reason the transmission waiting queue for the MAC client data increases in length, the OAM PDUs are not subjected to transmission delay and consequent network management failure is avoided.

### BRIEF DESCRIPTION OF THE DRAWINGS

The above and other aspects, features and advantages of the present invention will become more apparent from the following detailed description when taken in conjunction with the accompanying drawings in which:
FIG 1 is a block diagram illustrating a physical network structure of a general passive optical network;
FIG. 2 is a block diagram illustrating an OAM sublayer defined in IEEE802.3ah EFM Draft v1.1;
FIG 3 is a diagram for explaining an operation of a conventional control multiplexer;
FIG. 4 is a diagram for explaining an operation of a control multiplexer in which priority is given to OAM PDUs; and
FIG 5 is a flowchart illustrating an operation of a control multiplexer according to an embodiment of the present invention.

### DETAILED DESCRIPTION OF THE PREFERRED EMBODIMENT

A preferred embodiment of the present invention will now be described in detail with reference to the annexed drawings. In the following description, a detailed description of known functions and configurations incorporated herein has been omitted for conciseness and clarity of presentation.

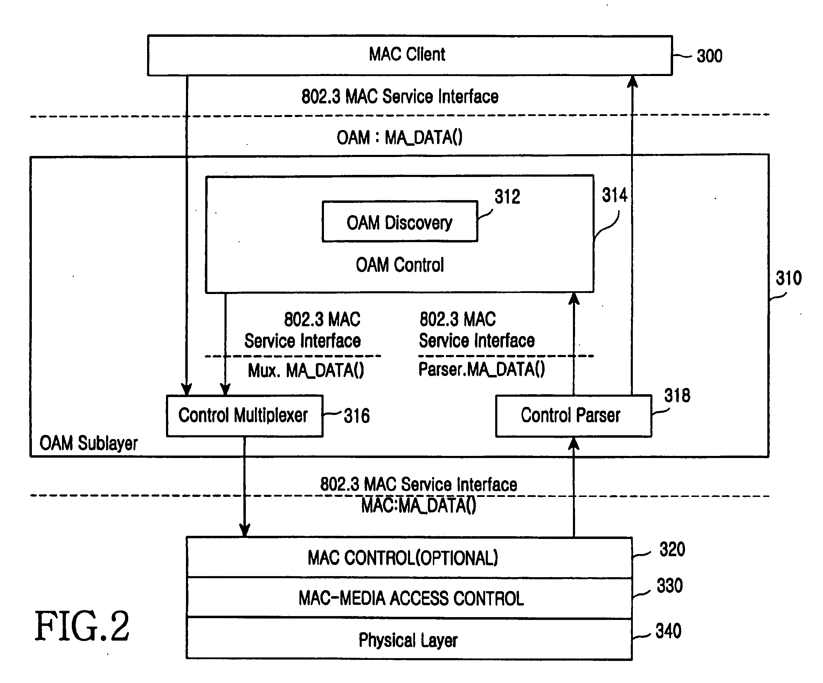

FIG. 2 is a block diagram illustrating an OAM sublayer 310 defined in IEEE802.3ah EFM Draft v1.1. The OAM sublayer is comprised of an OAM controller 314, a control multiplexer 316, and a control parser 318. MAC client data provided from an upper layer 300 and OAM PDUs created in the OAM controller 314 are multiplexed in the control multiplexer 316 for delivery to a MAC control sublayer 320.

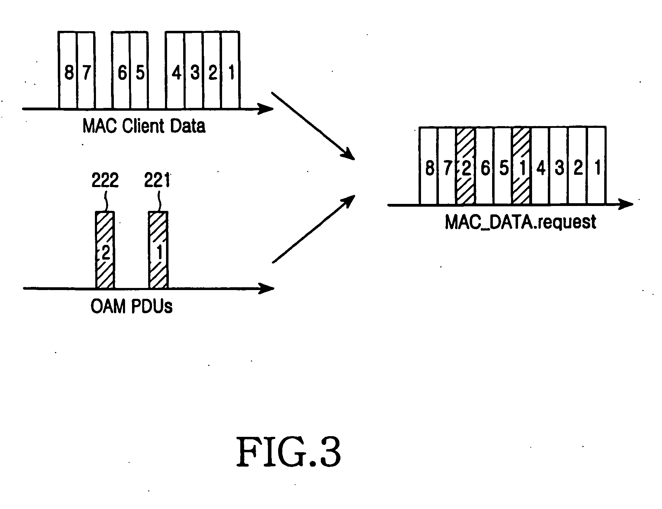

FIG 3 is a diagram for explaining the operation of a conventional control multiplexer while transmitting OAM PDUs in an OAM operation in a non loop-back mode and a non-unidirectional mode. A conventional control multiplexer transmits MAC client data and OAM PDUs in order of generation. As illustrated in FIG 3, if MAC client data frames are waiting to be transmitted, OAM PDUs generated cannot be immediately transmitted to the MAC control sublayer 320. That is, if OAM PDUs are generated later than the MAC client data frames which have not yet transmitted to the MAC control sublayer 320, the OAM PDUs are not transmitted until those earlier-generated MAC client data frames are transmitted completely. Therefore, as transmission waiting queue size for the MAC client data frames increases, so does waiting time of the OAM PDUs.

If MAC client data frames generated earlier than OAM PDUs are waiting to be transmitted, since the OAM PDUs cannot be transmitted, the transmission waiting queue size for the MAC client data frames proportionately increases the transmission waiting time of the OAM PDUs. The resultant transmission delay of OAM data makes it difficult if not impossible for the OAM function to rapidly cope with impending network management failure should such a contingency arise.

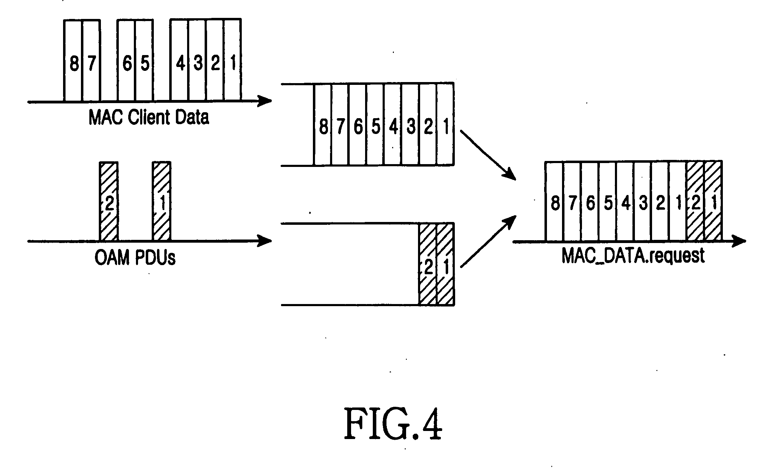

FIG. 4 is a diagram for explaining the operation of a control multiplexer that accords priority OAM PDUs. A control multiplexer according to the present invention gives priority to generated OAM PDUs to preferentially transmit the OAM PDUs ahead of MAC client data frames, in order to solve the problem occurring when MAC client data frames and OAM PDUs are transmitted in order of generation.

As described in conjunction with FIG 3, if MAC client data frames are generated in order of 1, 2, 3, 4,····, and OAM PDUs are generated in order or 1 and 2 with priority not being given (see FIG 3), then the OAM PDUs are not transmitted until MAC client data frames generated earlier than the OAM PDUs are transmitted in order of generation, as described in conjunction with FIG 3.

However, the control multiplexer 316 in the OAM sublayer according to the invention gives to the OAM PDUs priority higher than that accorded to the MAC client data frames. The control multiplexer 316, in effect, first transmits OAM PDUs even if they are generated later than the MAC client frames. As illustrated in FIG 4, since OAM PDUs are higher in priority than MAC client data frames, the OAM PDUs are transmitted in advance of the MAC client data frames regardless of their generation order. Accordingly, the OAM PDUs are not subject to transmission delay caused by an increase in length of a transmission waiting queue for the MAC client data frames.

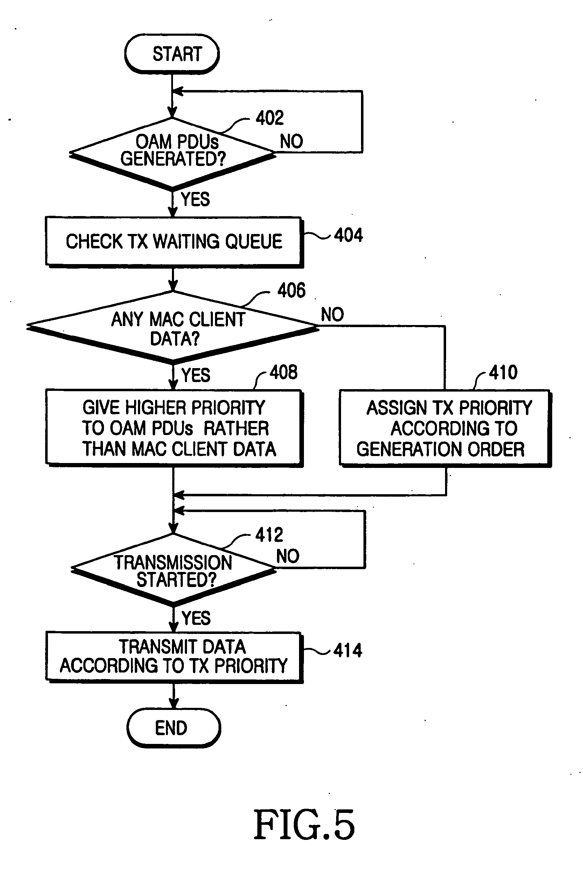

FIG. 5 is a flowchart illustrating, by way of non-limitative example, operation of a control multiplexer according to an embodiment of the present invention. Referring to FIGs. 2 and 5, the control multiplexer 316 of the OAM sublayer determines in step 402 whether the OAM controller 314 has generated OAM PDUs. If OAM PDUs have been generated, the OAM controller 314 delivers them to the control multiplexer 316 which transmits the OAM PDUs to the MAC control sublayer 320. Thus, the control multiplexer 316 can determine whether the OAM controller 314 has generated OAM PDUs. If OAM PDUs have been generated, the control multiplexer 316 checks a transmission waiting queue for MAC client data frames in step 404. Thereafter, the control multiplexer 316 monitors in step 406 whether the transmission waiting queue for the MAC client data frames has MAC client data to be delivered to the MAC control sublayer 320. If the transmission waiting queue for the MAC client data frames has MAC client data to be delivered to the MAC control sublayer 320, the control multiplexer 316 gives higher priority to OAM PDUs than to the MAC client data frames in step 408, and then proceeds to step 412. However, if it is determined that there is no MAC client data to transmit, the control multiplexer 316 assigns transmission priority according to generation order in step 410.

Thereafter, the control multiplexer 316 determines in step 412 whether transmission to the MAC control sublayer 320 is started. If transmission to the MAC control sublayer 320 is initiated, the control multiplexer 316 multiplexes OAM PDUs and MAC client data frames according to priorities assigned thereto, and then transmits the multiplexed data to the MAC control sublayer 320 in step 414.

As can be appreciated from the foregoing description, the control multiplexer of the OAM sublayer for multiplexing MAC client data frames and OAM PDUs, gives higher priority to the OAM PDUs than to the MAC client data frames. This priority scheme prevents transmission delay of OAM PDUs from occurring in response to an increase in length of the transmission waiting queue for MAC client data frames. The resultant efficient transmission of OAM information assures the availability of OAM to prevent impending network management failure in the event of such a contingency.

While the invention has been shown and described with reference to a particular preferred embodiment thereof, it will be understood by those skilled in the art that various changes in form and details may be made therein. For example, the innovatively configured OAM sublayer and its components may be implemented in software, hardware or firmware. Various modifications may be made without departing From the scope of the invention as defined by the appended claims.

## Claims

1. A method for transmitting Operation, Administration and Maintenance packet data by a control multiplexer (316) of an Operation, Administration and Maintenance sublayer (310) in an Ethernet passive optical network , the Operation, Administration and Maintenance sublayer (310) transmitting to a Medium Access Control entity (320, 330) Medium Access Control client data transmitted from a Medium Access Control client and Operation, Administration and Maintenance packet data created in an Operation, Administration and Maintenance controller (314), the method comprising the steps of:
if Operation, Administration and Maintenance packet data is generated by the Operation, Administration and Maintenance controller (314), giving to the Operation, Administration and Maintenance packet data priority higher than that given to Medium Access Control client data that is in the Medium Access Control client and that is waiting to be transmitted; and
multiplexing the Operation, Administration and Maintenance packet data and the Medium Access Control client data according to the priority and transmitting the multiplexed data to the Medium Access Control entity,
wherein the priority giving step comprises the step of determining whether Operation, Administration and Maintenance packet data is generated by the Operation, Administration and Maintenance controller (314),
wherein the determining step is performed by the control multiplexer (316),
wherein the determining step comprises the step of determining whether there presently exists in a queue said Medium Access Control client data that is in the Medium Access Control client and that is waiting to be transmitted, and
wherein if the Medium Access Control client data is determined to not exist in said queue, the multiplexing step comprises the step of assigning priority to the data according to an order in which the data was generated.

2. The method of claim 1, wherein the multiplexing step is performed by the control multiplexer (316).

3. An apparatus implementing an Operation, Administration and Maintenance sublayer (310) of an Ethernet passive optical network, the apparatus being configured for transmitting to a Medium Access Control entity (320, 330) Medium Access Control client data transmitted from a Medium Access Control client and Operation, Administration and Maintenance packet data created in an Operation, Administration and Maintenance controller (314), the apparatus comprising a control multiplexer (316) for giving, if Operation, Administration and Maintenance packet data is generated by the Operation, Administration and Maintenance controller (314), priority higher than that given to Medium Access Control client data that is in the Medium Access Control client and that is waiting to be transmitted, and transmitting the Operation, Administration and Maintenance packet data to the Medium Access Control entity in advance of the Medium Access Control client data,
wherein the control multiplexer (316) is configured for determining whether Operation, Administration and Maintenance packet data is generated by the Operation, Administration and Maintenance controller (314),
wherein the control multiplexer (316) is further configured for determining whether there presently exists in a queue said Medium Access Control client data that is in the Medium Access Control client and that is waiting to be transmitted, and
wherein the control multiplexer (316) is further configured to, if the Medium Access Control client data is determined to not exist in said queue, assign priority to the data according to an order in which the data was generated.

4. The apparatus of claim 3, wherein the control multiplexer (316) is configured to multiplex Medium Access Control client data and Operation, Administration and Maintenance packet data.

5. A computer program product having a computer-readable medium containing a computer program executable on a processor, said computer program comprising instructions to implement the Operation, Administration and Maintenance sublayer (310) in the apparatus of claim 3, wherein the control multiplexer (316) is implemented as instructions of said computer program that multiplex the Operation, Administration and Maintenance packet data and the Medium Access Control client data in accordance with said priority, wherein the control multiplexer (316) is implemented as instructions of said computer program that determine whether Operation, Administration and Maintenance packet data is generated by the Operation, Administration and Maintenance controller (314), and wherein the control multiplexer (316) is implemented as instructions of said computer program that determine whether there presently exists in a queue said Medium Access Control client data that is in the Medium Access Control client and that is waiting to be transmitted.

6. The computer program product of claim 5, wherein the control multiplexer (316) is implemented as instructions of said computer program that multiplex Medium Access Control client data and Operation, Administration and Maintenance packet data.

## Patentansprüche

1. Verfahren zum Senden von OAM (Operation, Administration and Maintenance) -Paketdaten durch einen Steuer-Multiplexer (316) einer OAM-Teilschicht (316) in einem passiven optischen Ethernet-Netzwerk, wobei die OAM-Teilschicht (310) MAC (Medium Access Control)-Client-Daten, die von einem MAC-Client gesendet werden, und OAM-Paketdaten, die in einer OAM-Steuereinheit (314) erzeugt werden, zu einer MAC -Einheit (320, 330) sendet und das Verfahren die folgenden Schritte umfasst:
wenn OAM-Paketdaten durch die OAM-Steuereinheit (314) erzeugt werden, Zuweisen von Priorität zu den OAM-Paketdaten, die höher ist als die, die MAC-Client-Daten zugewiesen wird, die sich in dem MAC-Client befinden und die darauf warten, gesendet zu werden; und
Multiplexen der OAM-Paketdaten und der MAC-Client-Daten gemäß der Priorität und Senden der Multiplexen unterzogenen Daten zu der MAC-Einheit,
wobei der Schritt des Zuweisens von Priorität den Schritt umfasst, mit dem bestimmt wird, ob OAM-Paketdaten durch die OAM-Steuereinheit (314) erzeugt werden,
wobei der Schritt des Bestimmens durch den Steuer-Multiplexer (316) durchgeführt wird,
wobei der Schritt des Bestimmens den Schritt umfasst, mit dem bestimmt wird, ob in einer Warteschlange aktuell die MAC-Client-Daten vorhanden sind, die sich in dem MAC-Client befinden und die darauf warten, gesendet zu werden, und
wobei, wenn bestimmt wird, dass die MAC-Client-Daten nicht in der Warteschlange vorhanden sind, der Schritt des Multiplexens den Schritt des Zuweisens von Priorität zu den Daten gemäß einer Reihenfolge umfasst, in der die Daten erzeugt wurden.

2. Verfahren nach Anspruch 1, wobei der Schritt des Multiplexens durch den Steuer-Multiplexer (316) durchgeführt wird.

3. Vorrichtung, die eine OAM-Teilschicht (310) eines passiven optischen Ethernet-Netzwerks implementiert, wobei die Vorrichtung so konfiguriert ist, dass sie von einem MAC-Client gesendete MAC-Client-Daten und in einer OAM-Steuereinheit (314) erzeugte OAM-Paketdaten zu einer MAC-Einheit (320, 330) sendet, wobei die Vorrichtung einen Steuer-Multiplexer (316) umfasst, der, wenn OAM-Paketdaten durch die OAM-Steuereinheit (314) erzeugt werden, höhere Priorität verleiht als sie MAC-Client-Daten verliehen wird, die sich in dem MAC-Client befinden und die darauf warten, gesendet zu werden, und die OAM-Paketdaten vor den MAC-Client-Daten zu der MAC-Einheit sendet,
wobei der Steuer-Multiplexer (316) so konfiguriert ist, dass er bestimmt, ob OAM-Paketdaten durch die OAM-Steuereinheit (314) generiert werden,
wobei der Steuer-Multiplexer (316) des Weiteren so konfiguriert ist, dass er bestimmt, ob in einer Warteschlange aktuell die MAC-Client-Daten vorhanden sind, die sich in dem MAC-Client befinden und die darauf warten, gesendet zu werden und
wobei der Steuer-Multiplexer (316) des Weiteren so konfiguriert ist, dass er, wenn bestimmt wird, dass die MAC-Client-Daten in der Warteschlange nicht vorhanden sind, den Daten gemäß einer Reihenfolge, in der die Daten erzeugt wurden, Priorität zuweist.

4. Vorrichtung nach Anspruch 3, wobei der Steuer-Multiplexer (316) so konfiguriert ist, dass er MAC-Client-Daten und OAM-Paketdaten multiplext.

5. Computerprogrammerzeugnis, das ein computerlesbares Medium aufweist, das ein auf einem Prozessor ausführbares Computerprogramm enthält, wobei das Computerprogramm Befehle zum Implementieren der OAM-Teilschicht (316) in der Vorrichtung nach Anspruch 3 umfasst, und der Steuer-Multiplexer (316) als Befehle des Computerprogramms implementiert wird, die die OAM-Paketdaten und die MAC-Client-Daten gemäß der Priorität multiplexen, wobei der Steuer-Multiplexer (316) als Befehle des Computerprogramms implementiert wird, die bestimmen, ob OAM-Paketdaten durch die OAM-Steuereinheit (314) erzeugt werden, und wobei der Steuer-Multiplexer (316) als Befehle des Computerprogramms implementiert wird, die bestimmen, ob in einer Warteschlange aktuell die MAC-Client-Daten vorhanden sind, die sich in dem MAC-Client befinden und die darauf warten, gesendet zu werden.

6. Computerprogrammerzeugnis nach Anspruch 5, wobei der Steuer-Multiplexer (316) als Befehle des Computerprogramms implementiert wird, die MAC-Client-Daten und OAM-Paketdaten multiplexen.

## Revendications

1. Procédé pour transmettre des paquets de données d'Exploitation, Administration et Maintenance par un multiplexeur de commande (316) d'une sous-couche d'Exploitation, Administration et Maintenance (310) dans un réseau optique passif Ethernet, la sous-couche d'Exploitation; Administration et Maintenance (310) transmettant à une entité de Commande d'Accès au Support (320, 330) des données de client de Commande d'Accès au Support provenant d'un client de Commande d'Accès au Support et des paquets de données d'Exploitation, Administration et Maintenance créés dans une unité de commande d'Exploitation, Administration et Maintenance (314), le procédé comprenant les étapes suivantes :
si des paquets de données d'Exploitation, Administration et Maintenance sont générés par l'unité de commande d'Exploitation, Administration et Maintenance (314), donner aux paquets de données d'Exploitation, Administration et Maintenance une priorité supérieure à celle donnée à des données de client de Commande d'Accès au Support qui sont dans le client de Commande d'Accès au Support et qui attendent d'être transmises; et
multiplexer les paquets de données d'Exploitation, Administration et Maintenance et les données de client de Commande d'Accès au Support conformément à la priorité, et transmettre les données multiplexées à l'entité de Commande d'Accès au Support,
dans lequel l'étape consistant à donner la priorité comprend l'étape consistant à déterminer si des paquets de données d'Exploitation, Administration et Maintenance sont générés par l'unité de commande d'Exploitation, Administration et Maintenance (314),
dans lequel l'étape de détermination est effectuée par le multiplexeur de commande (316),
dans lequel l'étape de détermination comprend l'étape consistant à déterminer s'il existe au moment présent dans une file d'attente lesdites données de client de Commande d'Accès au Support qui sont dans le client de Commande d'Accès au Support et qui attendent d'être transmises, et
dans lequel s'il est déterminé que les données de client de Commande d'Accès au Support n'existent pas dans ladite file d'attente, l'étape de multiplexage comprend l'étape consistant à assigner une priorité aux données conformément à un ordre dans lequel les données ont été générées.

2. Procédé selon la revendication 1, dans l'étape de multiplexage est effectuée par le multiplexeur de commande (316).

3. Appareil réalisant une sous-couche d'Exploitation, Administration et Maintenance (310) d'un réseau optique passif Ethernet, l'appareil étant configuré pour transmettre à une entité de Commande d'Accès au Support (320, 330) des données de client de Commande d'Accès au Support provenant d'un client de Commande d'Accès au Support, et des paquets de données d'Exploitation, Administration et Maintenance créés dans une unité de commande d'Exploitation, Administration et Maintenance (314), l'appareil comprenant un multiplexeur de commande (316) pour donner, si des paquets de données d'Exploitation, Administration et Maintenance sont générés par l'unité de commande d'Exploitation, Administration et Maintenance (314), une priorité supérieure à celle donnée à des données de client de Commande d'Accès au Support qui sont dans le client de Commande d'Accès au Support et qui attendent d'être transmises, et pour transmettre les paquets de données d'Exploitation, Administration et Maintenance à l'entité de Commande d'Accès au Support avant les données de client de Commande d'Accès au Support,
dans lequel le multiplexeur de commande (316) est configuré pour déterminer si des paquets de données d'Exploitation, Administration et Maintenance sont générés par l'unité de commande d'Exploitation, Administration et Maintenance (314),
dans lequel le multiplexeur de commande (316) est en outre configuré pour déterminer s'il existe au moment présent dans une file d'attente lesdites données de client de Commande d'Accès au Support qui sont dans le client de Commande d'Accès au Support et qui attendent d'être transmises, et
dans lequel le multiplexeur de commande (316) est en outre configuré pour assigner une priorité aux données conformément à un ordre dans lequel les données ont été générées, s'il est déterminé que les données de client de Commande d'Accès au Support n'existent pas dans ladite file d'attente.

4. Appareil selon la revendication 3, dans lequel le multiplexeur de commande (316) est configuré pour multiplexer des données de client de Commande d'Accès au Support et des paquets de données d'Exploitation, Administration et Maintenance.

5. Produit programme informatique ayant un support lisible par ordinateur contenant un programme informatique exécutable sur un processeur, ce programme informatique comprenant des instructions pour réaliser la sous-couche d'Exploitation, Administration et Maintenance (310) dans l'appareil de la revendication 3, dans lequel le multiplexeur de commande (316) est réalisé sous la forme d'instructions dudit programme informatique qui multiplexent les paquets de données d'Exploitation, Administration et Maintenance et les données de client de Commande d'Accès au Support conformément à ladite priorité, dans lequel le multiplexeur de commande (316) est réalisé sous la forme d'instructions dudit programme informatique qui déterminent si des paquets de données d'Exploitation, Administration et Maintenance sont générés par l'unité de commande d'Exploitation, Administration et Maintenance (3.14), et dans lequel le multiplexeur de commande (316) est réalisé sous la forme d'instructions dudit programme informatique qui déterminent s'il existe au moment présent dans une file d'attente lesdites données de client de Commande d'Accès au Support qui sont dans le client de Commande d'Accès au Support et qui attendent d'être transmises.

6. Produit programme informatique selon la revendication 5, dans lequel le multiplexeur de commande (316) est réalisé sous la forme d'instructions dudit programme informatique qui multiplexent des données de client de Commande d'Accès au Support et des paquets de données d'Exploitation, Administration et Maintenance.
